# EUROPEAN PATENT SPECIFICATION

(11) **EP 2 424 033 B1**
(45) Date of publication and mention of the grant of the patent: **23.01.2013**
(21) Application number: 10174220.3
(22) Date of filing: 26.08.2010
(51) Int. Cl.: H01Q 1/24, H01Q 5/00, H05K 1/02, H05K 5/04, H01Q 1/48, H01Q 9/04, H05K 5/00, H04M 1/02

(54) **Mobile wireless communications device having a frequency selective grounding circuit**
Tragbares drahtloses Kommunikationsgerät mit frequenzselektiver Erdungsschaltung
Circuit de mise à terre de fréquence selective pour un dispositif de communication mobile sans fil doté

(43) Date of publication of application: 29.02.2012
(73) Proprietor: Research In Motion Limited, Waterloo, ON N2L 3W8 (CA)
(72) Inventor: Wong, Joshua Kwan Ho, Waterloo Ontario N2L 5R9 (CA); Cooke, Adrian Matthew, Waterloo Ontario N2L 5R9 (CA)
(74) Representative: Roberts, Gwilym Vaughan

(56) References cited:
- WO-A1-2008/078144
- JP-A- 11 355 022
- JP-A- 2010 122 525
- US-A1- 2005 243 486
- US-A1- 2009 256 758
- US-A1- 2010 090 921

## Description

### Technical Field

The present disclosure generally relates to the field of wireless communications systems, and more particularly, to mobile wireless communications device and related methods.

### Background

Mobile wireless communications systems continue to grow in popularity and have become an integral part of both personal and business communications. For example, mobile wireless communications devices, such as cellular telephones, allow users to place and receive voice calls most anywhere they travel. Moreover, as this telephone technology has increased, so too has the functionality of these devices and the different types of devices available to users. For example, many mobile wireless communications devices now incorporate personal digital assistant (PDA) features such as calendars, address books, task lists, etc. Moreover, such multi-function devices may also allow users to send and receive electronic mail (email) messages wirelessly and access the Internet via a cellular network and/or a wireless local area network (WLAN), for example.

Even so, as the functionality of these types of communications devices continues to increase, so too does the demand for smaller devices which are easier and more convenient for users to carry. One challenge this poses for cellular device manufacturers is designing housings and antennas that provide desired operating characteristics and grounding capability within the relatively limited amount of space available for various components.

US 2005/243486 details a grounding arrangement for a communication product including an external conductive surface, an internal ground, and a frequency selective ground path between the external conductive surface and the internal ground. The frequency selective ground path provides for a high impedance path between the external conductive surface and the internal ground for signals at a predetermined operating frequency range for the communication product and a low inductance path between the external conductive surface and the ground for signals operating at electrostatic frequencies. The internal ground can reside on the surface of a printed circuit board within the communication product and the external conductive surface can be coupled to the internal ground via a spring contact and an inductor or a resonant circuit.

### Brief Description of the Drawings

Other objects, features and advantages will become apparent from the detailed description which follows, when considered in light of the accompanying drawings in which:

FIG. 1 is a perspective view of a mobile wireless communications device that includes a portable housing having a metallic front housing forming a peripheral side wall as a metallic ring.

FIG. 2 is another perspective view similar to that shown in FIG. 1, but showing a housing cover removed and showing a circuit board that forms a chassis ground plane and showing an antenna structure situated thereon.

FIGS. 3A and 3B are views of a finite element analysis of a computed vector current density on the surface of the chassis at respective low frequency and high frequency when there is no metallic ring.

FIGS. 4A and 4B are views of a finite element analysis of the computed vector current density at the surface of the chassis when surrounded by a "floating," i.e., electromagnetically isolated, metallic ring at respective low frequency and high frequency.

FIG. 5 is a graph showing the measured return loss and transmission of the communications device with a "floating" ground ring.

FIG. 6 is a view of a finite element analysis and showing the computed vector current density on the chassis when the metallic ring is grounded at three locations using the frequency selective grounding circuit in accordance with a non-limiting example.

FIG. 7 is a graph showing measured return loss and transmission when the metallic ring is grounded in accordance with a non-limiting example.

FIG. 8 is a plan view of a communications device with the cover removed and showing optimal grounding locations for the metallic ring in accordance with a non-limiting example.

FIG. 9 is a perspective view showing a test set-up for the variable matching device, which is shown circled in red and showing its size relative to the chassis ground plane.

FIG. 10 is a schematic block diagram showing how the variable matching device changes impedance across various ports by programming a chip set in accordance with a non-limiting example.

FIGS. 11A and 11B are graphs showing how by changing the value of capacitance (Cb) for the WCDMA band one a short or open condition is created.

FIG. 12 is a schematic block diagram of an example of a mobile wireless communications device configured as a handheld device that can be used in accordance with non-limiting examples and illustrating basic internal components.

FIG. 13 is a front elevation view of the mobile wireless communications device of FIG. 12.

FIG. 14 is a schematic block diagram showing basic functional components that can be used in the mobile wireless communications device as described.

### Summary

The invention is defined in apparatus claim 1 and method claim 8. Further aspects and features of the present disclosure are set out in the dependent claims.

A respective frequency selective grounding circuit in an example operates at a specific range of frequencies. In another example, a respective frequency selective grounding circuit is formed from at least one of a series resonator and parallel resonator having a value depending on bandwidth requirements. The series resonator resonates at high frequencies in one example. A grounding location is specific to the frequency of operation and in another example, the frequency selective grounding circuit has a programmable frequency response for grounding. This frequency selective grounding circuit is formed as a variable matching device in an example.

In another example, the antenna is formed as a planar inverted F antenna (PIFA). The wireless communications circuit is formed as a cellular communications circuit in another example. The device further includes a display and user input device both carried by the portable housing and connected to the wireless communications circuit.

In another example, the frequency selective grounding circuit forms a harmonic trap that responds to a specific range of frequencies and formed as a variable matching device in which the frequency response of a grounding is programmed to operate at a specific range of frequencies. The variable matching device is also configured to change the impedance at a grounding location that is specific to the frequency of operation in an example.

### Detailed Description

The present description is made with reference to the accompanying drawings, in which exemplary embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements in alternative embodiments.

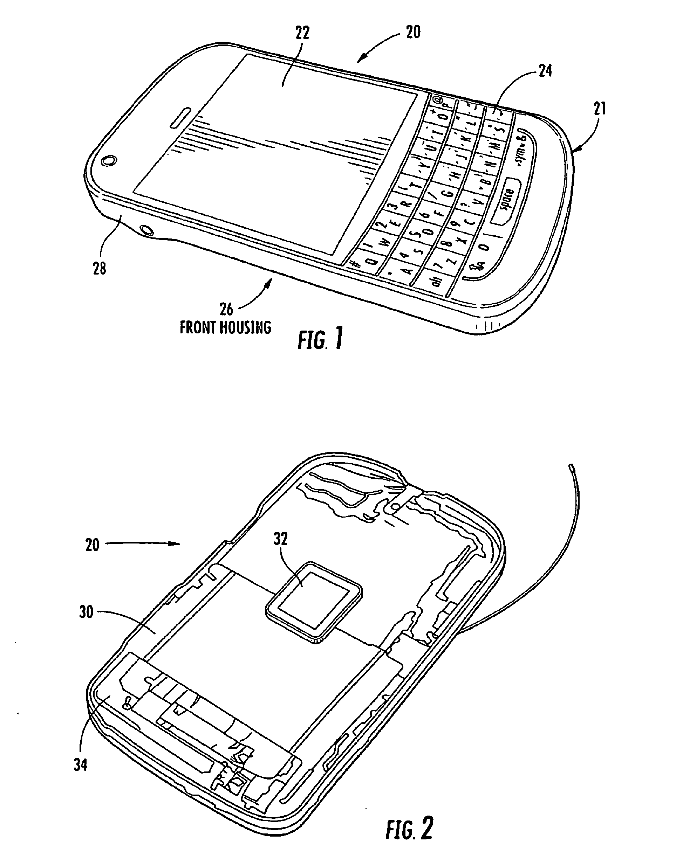

The current trend in industrial design demands increasing use of metallic materials in a mobile wireless communications device such as a handheld device. This proposes a significant challenge to antenna designers because any introduction of metal in the portable wireless communications device such as a cellular phone usually has a detrimental impact on antenna performance. FIG. 1 shows a portable wireless communications device **20** having a portable housing **21,** a display **22,** and keyboard **24** and front housing **26** forming a peripheral sidewall as a ring **28.** Measurements indicate that changing the front housing material from plastic to metal will harm the antenna performance in the Digital Communications System (DCS), Personal Communications Service (PCS) and Wideband Code Division Multiple Access (WCDMA) band one. This situation is made worse because the metallic front housing forms a peripheral sidewall as a metallic ring 28 and surrounds every antenna in the device in one non-limiting device example. Thus, the metallic ring formed as a peripheral sidewall overlaps every antenna. One technique to overcome the impact of the metallic front housing is to connect the metallic front housing to system ground in such a manner that it appears to be electromagnetically the same as the main printed circuit board. A number of manufacturers take this approach and this is achieved by grounding the portable housing at enough locations such that it behaves as part of the main printed circuit board.

There are drawbacks to this approach because this solution typically works only if the vertical sidewalls of the housing do not overlap the antennas, which is not the case in some portable wireless communications device such as the example that is shown in FIG. 1. Grounding locations also must work for different bands of operation. With a modern portable wireless communications device providing as many as ten bands or more, it is difficult to maintain good radiation performance because each band will require specific grounding locations that are not ideal for another band. For example, a location that provides good radiation performance for GSM580 mobile operation may be detrimental to DCS as another example. Also, the mechanical and ID constraints may prevent grounding at certain critical locations. Grounding takes up the printed circuit board real estate and a device may only allow a limited number of grounding locations.

In a non-limiting example, this problem is solved in which the groundings of the metallic front housing are frequency selective. A frequency selective grounding circuit is positioned at selected grounding locations and forms a harmonic trap that responds to a specific range of frequencies. In one example, each grounding location works for a specific range of frequencies that can be determined by design. To achieve frequency selectivity, the grounding makes use of either a series or parallel resonator depending on the bandwidth requirements and forms a harmonic trap.

FIG. 2 shows an example of a portable wireless communications device **20** formed as a mobile handheld device that includes a circuit board **30** carried by the portable housing **21** and forming a chassis ground plane by means of the outermost surface of the PCB. A wireless communications circuit **32** is carried by the circuit board and in one example is typically enclosed within a container or "can" on the board. An antenna circuit **34** is carried by the circuit board and connected to the wireless communications circuit and in this example is formed as a planar inverted F antenna (PIFA). The portable housing **21** has a metallic front housing **26** forming a peripheral sidewall as a metallic ring **28** as illustrated and also shown in FIG. 1.

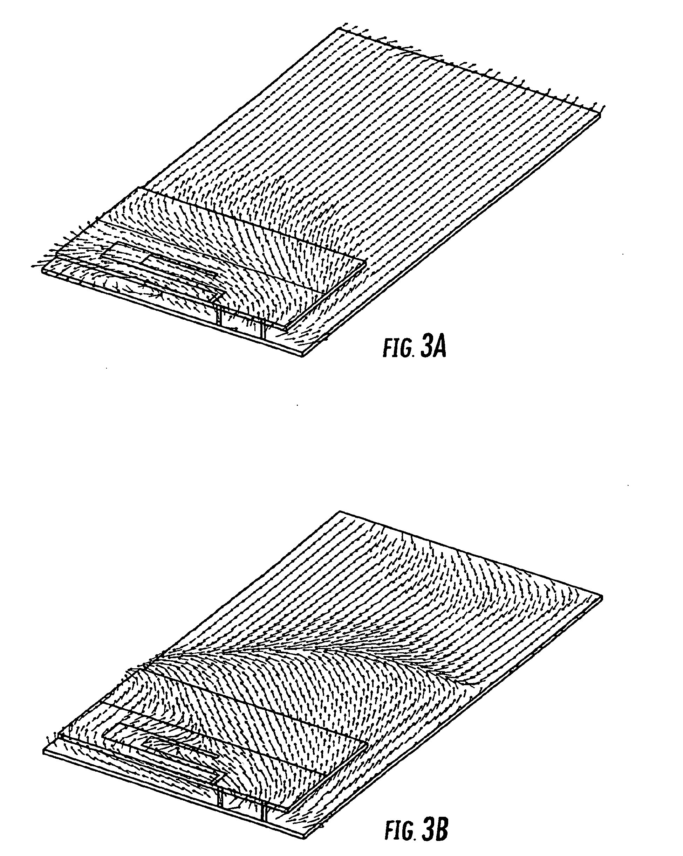

In the absence of the metallic ring, the current will flow in the chassis as part of the circuit board as shown in FIG. 3A at low frequency and shown in FIG. 3B as high frequency. Those figures illustrate the finite element analysis of the computed vector current density on the surface of the chassis formed by the outer surface of the board in this non-limiting example. At low frequency, the current flows uniformly on the chassis and the system behaves similar to a dipole antenna. At high frequency, a dominant current flow is observed along the shorter edge of the chassis. Furthermore, a null is seen along the middle of the chassis.

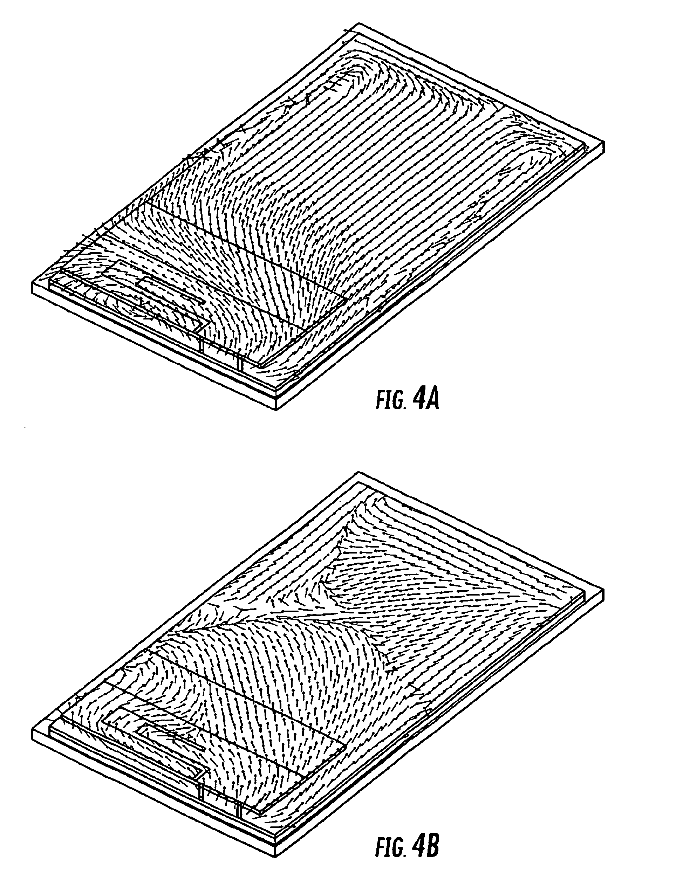

When the metallic front housing is used and forms the peripheral sidewall as a metallic ring and inserted around the chassis, there is significant disruption to the current flow. An example of that structure is seen in FIGS. 1 and 2 and described above. As shown in FIGS. 4A and 4B, the presence of the metallic ring causes erratic changes in the current flow, where the currents flow in opposite direction along the edges. When the current flow changes direction over short distances, the radiated fields will experience a destructive interference. FIG. 4A shows an example at low frequency and FIG. 4B shows an example at high frequency. These figures in FIGS. 4A and 4B illustrate the finite element analysis of the computed vector current density at the surface of the chassis when surrounded by a floating metallic ring.

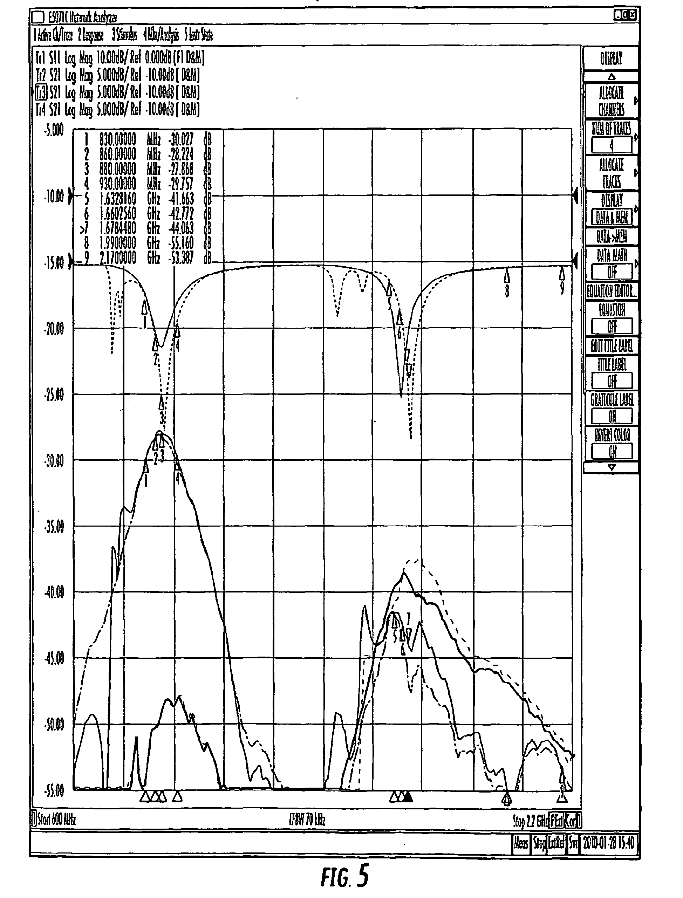

The destructive interference is shown in the graph of FIG. 5 and showing the measured return loss and transmission of the antenna. The valleys in the return loss plot show the resonant frequencies of the portable wireless communications device. It can be seen from the S21 plot that not all resonant frequencies radiate. These resonances are called destructive resonances.

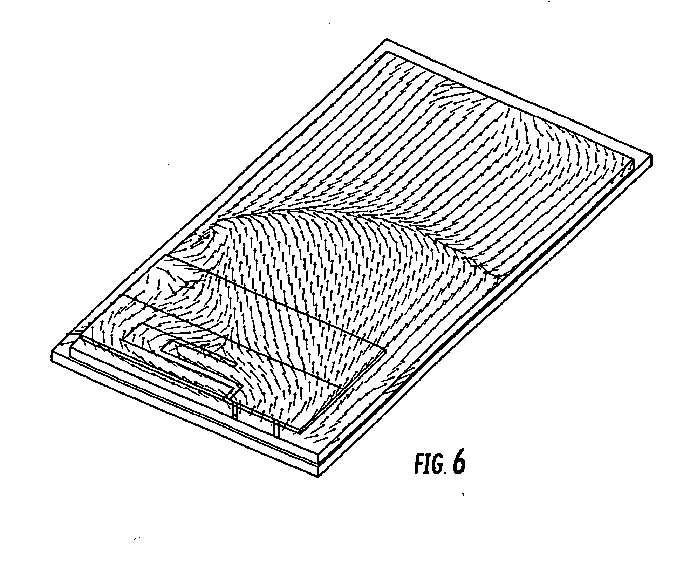

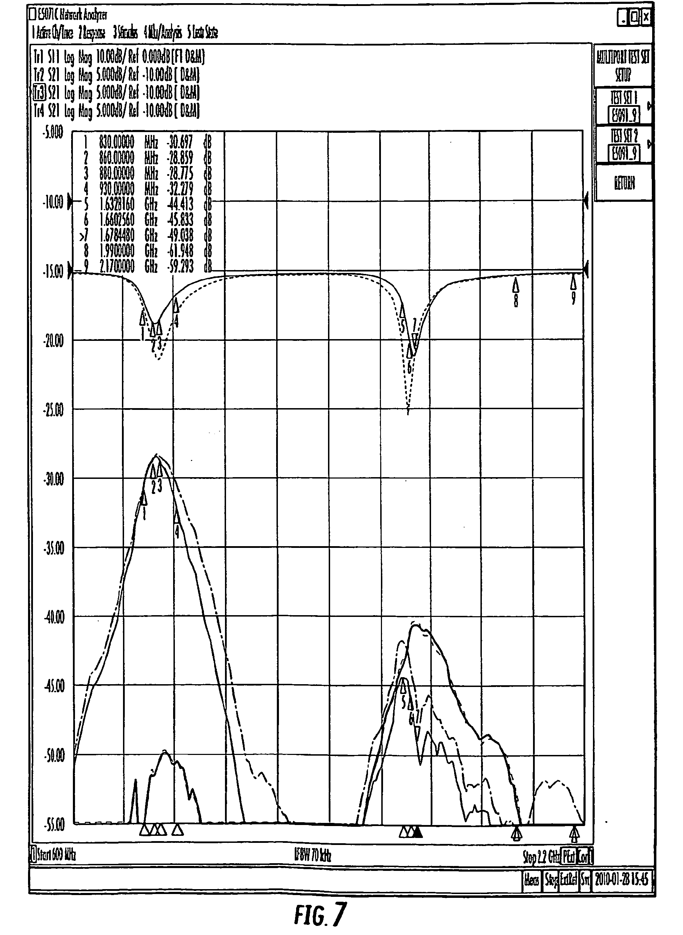

To minimize the destructive resonances, in accordance with a non-limiting example, the metallic ring is grounded at locations where the current changes direction. The resulting current distribution for high frequency is shown in FIG. 6 and shows the finite element analysis with the computed vector current density on the chassis and the metallic ring grounded at three locations. Comparing this plot against the graph shown in FIG. 3B, it is possible to see that the current distribution of the chassis is not much closer to the case when the metallic ring is absent. This is confirmed in the measurement shown in the graph of FIG. 7 in which the destructive resonances are no longer present.

In accordance with a non-limiting example, when the metallic ring is floating (or isolated), a transmission line is created between the chassis and the ground. The currents in the ring and chassis will flow in opposite directions. Grounding the metallic ring creates a condition where the metallic ring and the chassis appear to be a single object electromagnetically. However, the grounding location is specific to the frequency of operation.

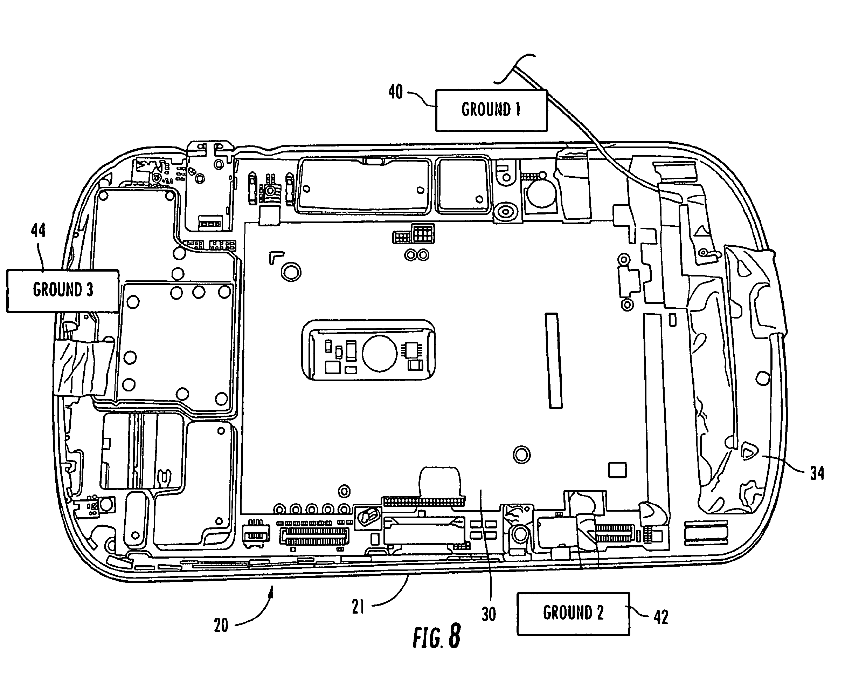

FIG. 8 shows a plan view of a portable wireless communications device **20** with the chassis **30** and showing three frequency selective grounding circuits referred to as **40, 42, 44** ground locations in which ground 1 and ground 2 improve DCS performance, but decrease GSM850 slightly. In accordance with a non-limiting example, the grounding will respond to a specific range of frequencies using the frequency selective grounding circuit.

In one non-limiting example, this is achieved by making use of the harmonic trap instead of a 0 Ohm connection. The harmonic trap is a circuit or structure whereby the impedance is either nearly zero or nearly infinite at a given frequency or range of frequencies. For example, in the configuration shown in FIG. 8, ground 1 **(40)** and ground 2 **(42)** are used to inhibit the destructive interferences at high frequencies. As noted before, ground 1 and ground 2 cause slight destructive interferences at low frequencies. To achieve an optimal solution, in a non-limiting example, it is advantageous if ground 1 and ground 2 are electromagnetically transparent to the antenna at low frequencies. In one example, it is accomplished by replacing ground 1 and ground 2 with a series resonator that resonates at high frequencies only. The resonator could be formed by traces or discrete components, and could be formed in series or in parallel. This makes ground 1 and ground 2 exhibit a low impedance at high frequencies and a high impedance at low frequencies. As a result, low frequencies will not be able to flow through the resonator and avoid degradation that is otherwise introduced by a 0 Ohm connection.

In yet another example, a frequency selective grounding circuit is programmable and permits the ability to program the frequency response of the grounding. In a non-limiting example, the frequency selective grounding circuit includes a Variable Matching Device (VMD) in a front end chip set. More than one front end chip set can be used with multiple variable matching devices. In this example, a variable matching device as a device is incorporated into a harmonic trap or trace line in some instances at the ground location or adjacent, and offers a designer the opportunity to fine tune the exact frequency response of a grounding location. The variable matching device can be part of a chip set and allow impedance and/or capacitance to vary for grounding.

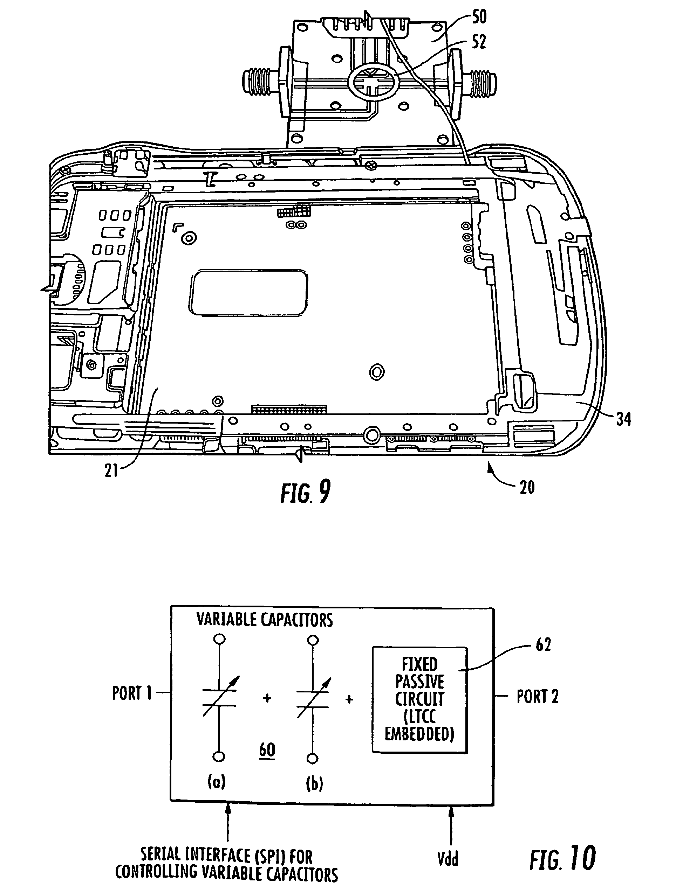

FIG. 9 shows a test set up **50** for testing the variable matching device and shows the size of the small variable matching device circled in the test set up at **52** relative to the size of other components in the device **20**. This variable matching device can be incorporated at or near a grounding location.

FIG. 10 is a schematic block diagram showing variable capacitors **60** and a fixed passive circuit **62** that is LTCC embedded and showing the variable capacitors as connected to port 1 and through a fixed passive circuit through port 2 and the serial peripheral interface (SPI) for controlling the variable capacitors as part of the variable matching device. This permits the programming for grounding. This device changes the impedance across port 1 to port 2 by programming a chip set through the SPI port. The two variable capacitances (CA, CB) are used in the current evaluation.

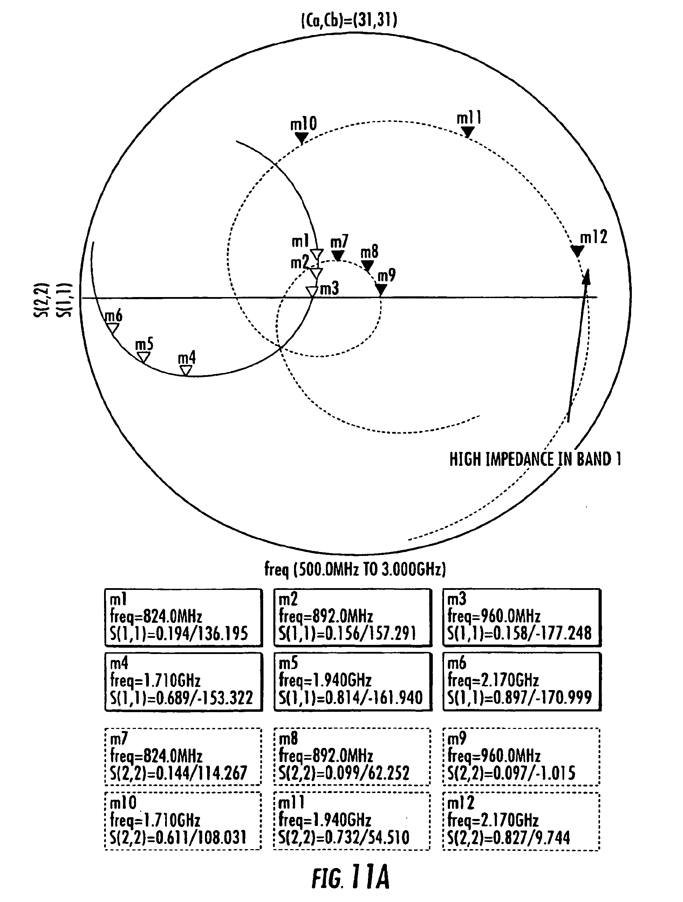

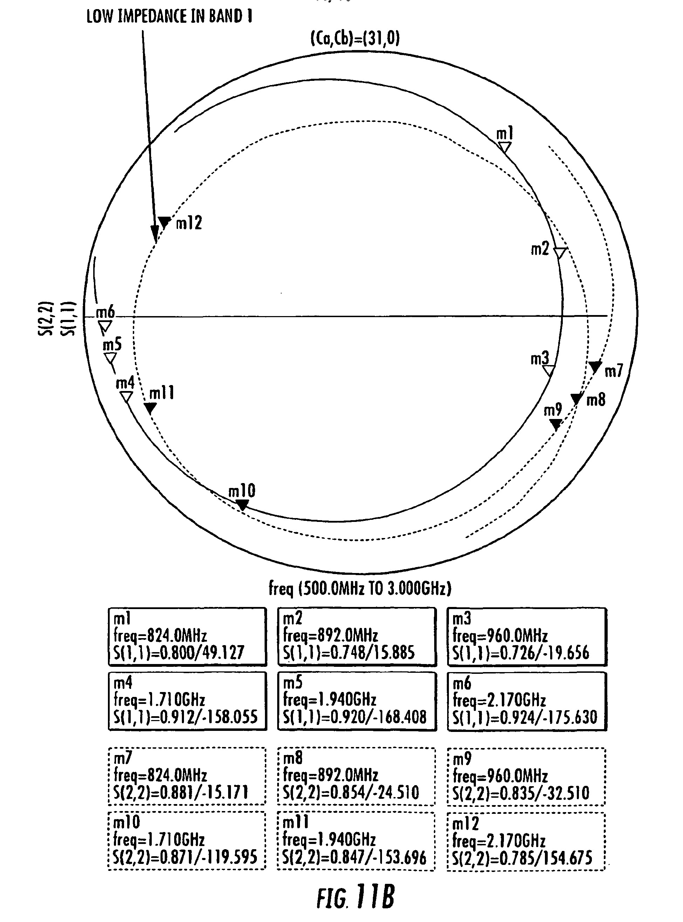

FIGS. 11A and 11B are graphs showing examples for the high impedance in band one (FIG. 11A) and the low impedance in band one (FIG. 11B) when changing the value of Cb for the WCDMA band one to create a short or open condition.

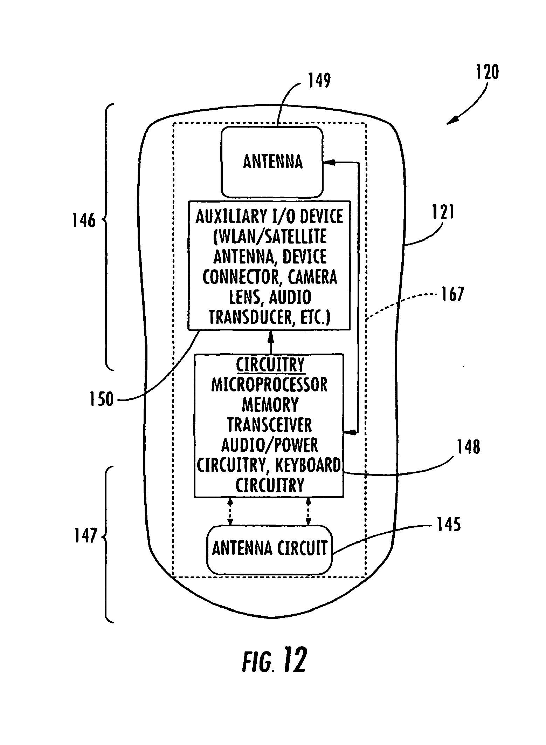

A brief description will now proceed relative to FIGS. 12-14, which disclose an example of a mobile wireless communications device, for example, a handheld portable cellular radio, which can incorporate as non-limiting examples the various circuits that can be used as described above. FIGS. 12-14 are representative non-limiting examples of the many different types of functional circuit components and their interconnection, and operative for use with the frequency selective grounding circuit.

Referring now to FIG. 12, an example of a mobile wireless communications device **120**, such as a handheld portable cellular radio is described as an example mobile wireless communications device that can be used. This device **120** illustratively includes a housing **121** having an upper portion **146** and a lower portion **147**, and a dielectric substrate (i.e., circuit board) **167,** such as a conventional printed circuit board (PCB) substrate, for example, carried by the housing. A housing cover (not shown in detail) would typically cover the front portion of the housing. The term circuit board **167** as used hereinafter can refer to any dielectric substrate, PCB, ceramic substrate or other circuit carrying structure for carrying signal circuits and electronic components within the mobile wireless communications device **120**. The illustrated housing **121** is a static housing, for example, as opposed to a flip or sliding housing, which is used in many cellular telephones. However, these and other housing configurations may also be used. In this example, the circuit board **167** is about the same size as the housing **121,** and thus, a cable connecting the upper antenna and any switches **149** and antenna **145** at the lower end is not used.

Circuitry **148** is carried by the circuit board **167**, such as a microprocessor, memory, one or more wireless transceivers (e.g., cellular, WLAN, etc.), which includes RF circuitry, including audio and power circuitry, including any keyboard circuitry. It should be understood that keyboard circuitry could be on a separate keyboard, etc., as will be appreciated by those skilled in the art. A battery (not shown) is also preferably carried by the housing **121** for supplying power to the circuitry **148.** The term RF circuitry could encompass the interoperable RF transceiver circuitry, power circuitry and audio circuitry. The circuit board carries a main antenna **145** at the lower end of the housing and antenna **149** (such as a diversity antenna) at the upper end of the housing in this non-limiting example, although other configurations could be used .

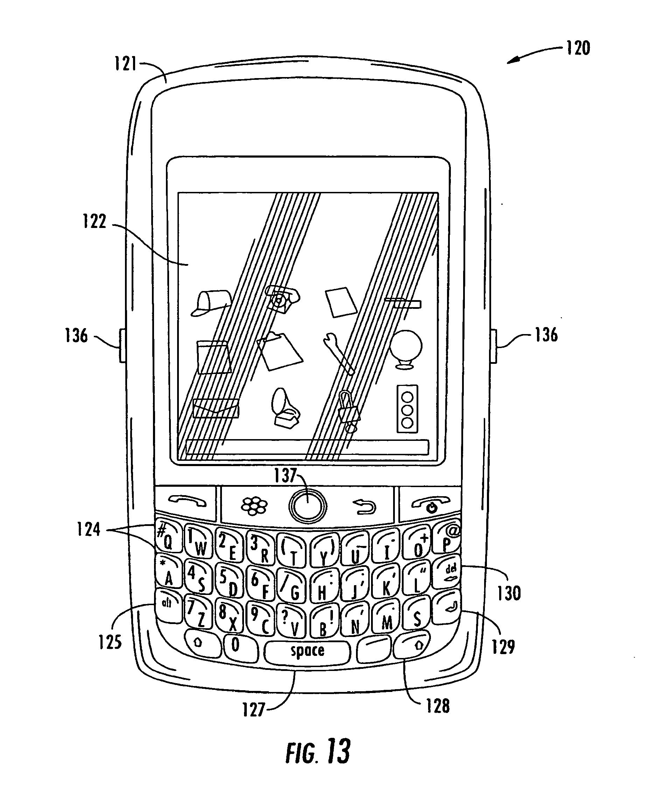

Furthermore, an audio output transducer (e.g., a speaker) is carried by an upper portion **146** of the housing **121** and connected to the circuitry **148.** One or more user input interface devices, such as a keypad (keyboard) **123** (FIG. 13), is also preferably carried by the housing **121** and connected to the circuitry **148**. The term keypad **123** as used herein also refers to the term keyboard, indicating the user input devices having lettered and/or numbered keys commonly known and other embodiments, including multi-top or predictive entry modes. Other examples of user input interface devices include a track ball **137** and convenience keys **136,** which could be positioned on the left and right sides of the housing. Of course, it will be appreciated that other user input interface devices (e.g., a stylus or touch screen interface) may be used in other embodiments. Also, other input interface devices could be used, for example, a mute/standby key, volume key or other menu. The housing could incorporate headset pads, USB ports, media card slots and other similar keys or inputs.

Antenna **145** is preferably positioned at the lower portion **147** in the housing (FIG. 12). Other antenna configurations can be used as non-limiting examples. In one non-limiting example, the antenna **145** could be formed on an antenna circuit board that extends from the main circuit board at the lower portion of the housing. Also, a separate keyboard circuit board could be used. Any separate antenna in some cases could be used and placed on a separate board and separated from each other. Other components could be placed on separate boards, for example, any transducers such as speakers and microphones could be mounted on separate boards. The antenna **149** is located away from the main antenna **145** in this example.

More particularly, a user will typically hold the upper portion of the housing **121** very close to his head so that any audio output transducer is directly next to his ear. Yet, the lower portion **147** of the housing **121** where an audio input transducer (i.e., microphone) is located need not be placed directly next to a user's mouth, and can be held away from the user's mouth. That is, holding the audio input transducer close to the user's mouth may not only be uncomfortable for the user, but it may also distort the user's voice in some circumstances.

Another important benefit of placing the antenna **145** adjacent the lower portion **147** of the housing **121** is that this may allow for less impact on antenna performance due to blockage by a user's hand. Users typically hold phones toward the middle to upper portion of the phone housing, and are therefore more likely to put their hands over such an antenna than they are an antenna mounted adjacent the lower portion **147** of the housing **121**. Accordingly, more reliable performance may be achieved by placing the antenna **145** adjacent the lower portion **147** of the housing **121**.

Still another benefit of this configuration is that it provides more room for one or more auxiliary input/output (I/O) devices **150** to be carried at the upper portion **146** of the housing. Furthermore, by separating the main antenna **145** from the auxiliary I/O device(s) **150,** this may allow for reduced interference therebetween.

Examples of auxiliary I/O devices **150** could include another antenna besides a diversity antenna, such as a WiFi or WLAN (e.g., Bluetooth, IEEE 802.11) antenna for providing WLAN communication capabilities and/or a satellite positioning system (e.g., GPS, Galileo, etc.) antenna for providing position location capabilities, as will be appreciated by those skilled in the art. Other examples of auxiliary I/O devices **150** include a second audio output transducer (e.g., a speaker for speaker phone operation), and a camera lens for providing digital camera capabilities, an electrical device connector (e.g., USB, headphone, secure digital (SD) or memory card, etc.).

It should be noted that the term "input/output" as used herein for the auxiliary I/O device(s) **150** means that such devices may have input and/or output capabilities, and they need not provide both in all embodiments. That is, devices such as camera lenses may only receive an optical input, for example, while a headphone jack may only provide an audio output.

The device **120** further illustratively includes a display **122** (FIG. 13), for example, a liquid crystal display (LCD) carried by the housing **121** and connected to the circuitry **148** (FIG. 12). Convenience keys **136** and track ball **137** can also be connected to the circuitry **148** for allowing a user to navigate menus, text, etc., as will be appreciated by those skilled in the art. The track ball **137** may also be referred to as a "thumb wheel" or a "track wheel" in some instances and positioned in different locations. The keypad **123** illustratively includes a plurality of multi-symbol keys **124** each having indicia of a plurality of respective symbols thereon. The keypad **123** also illustratively includes an alternate function key **125**, a space key **127**, a shift key **128**, a return (or enter) key **129**, and a backspace/delete key **130**.

Some keys could also be used to enter a "*" symbol upon first pressing or actuating the alternate function key **125**. Similarly, the space key **127**, shift key **128** and backspace key **130** could be used to enter a "0" and "#", respectively, upon first actuating the alternate function key **125** in some examples. The keypad **123** could include an escape key, an end or power key, and a convenience (i.e., menu) key for use in accessing an expanded home screen and placing cellular telephone calls. Many of these keys can be located in different positions.

Moreover, the symbols on each key **124** are arranged in top and bottom rows. The symbols in the bottom rows are entered when a user presses a key **124** without first pressing the alternate function key **125**, while the top row symbols are entered by first pressing the alternate function key in this example keyboard. As seen in FIG. 13, the multi-symbol keys **124** are arranged in the rows on the keypad **123**. Furthermore, the letter symbols on each of the keys **124** are arranged to define a QWERTY layout. That is, the letters on the keypad **123** are presented in a three-row format, with the letters of each row being in the same order and relative position as in a standard QWERTY keypad. Each row of keys can be arranged in columns.

Accordingly, the mobile wireless communications device **120** as described may advantageously be used not only as a traditional cellular phone, but it may also be conveniently used for sending and/or receiving data over a cellular or other network, such as Internet and email data, for example. Of course, other keypad configurations may also be used in other embodiments. Multi-tap or predictive entry modes may be used for typing e-mails, etc. as will be appreciated by those skilled in the art.

Different antenna can operate together as a multifrequency band antenna system, which provides enhanced transmission and reception characteristics over multiple operating frequencies. More particularly, the antennae are designed to provide high gain, desired impedance matching, and meet applicable SAR requirements over a relatively wide bandwidth and multiple frequency bands such as different cellular frequency bands. For example, the antennae can operate over five bands, for example, a 850 MHz Global System for Mobile Communications (GSM) band (GSM 850), a 900 MHz GSM band, a DCS band, a PCS band, and a WCDMA band (i.e., up to about 2100 MHz) (or CDMA 850/1900), although it may be used for other bands/frequencies as well as noted above. To conserve space, a main antenna may advantageously be implemented in three dimensions although it may be implemented in two-dimensional or planar embodiments as well.

The mobile wireless communications device shown in FIGS. 12 and 13 can incorporate e-mail and messaging accounts and provide different functions such as composing e-mail, PIN messages, and SMS messages. The device can manage messages through an appropriate menu that can be retrieved by choosing a messages icon. An address book function could add contacts, allow management of an address book, set address book options and manage SIM card phone books. A phone menu could allow for the making and answering of phone calls using different phone features, managing phone call logs, setting phone options, and viewing phone information. A browser application could permit the browsing of web pages, configuring a browser, adding bookmarks, and changing browser options. Other applications could include a task, memo pad, calculator, alarm and games, as well as handheld options with various references.

A calendar icon can be chosen for entering a calendar program that can be used for establishing and managing events such as meetings or appointments. The calendar program could be any type of messaging or appointment/meeting program that allows an organizer to establish an event, for example, an appointment or meeting.

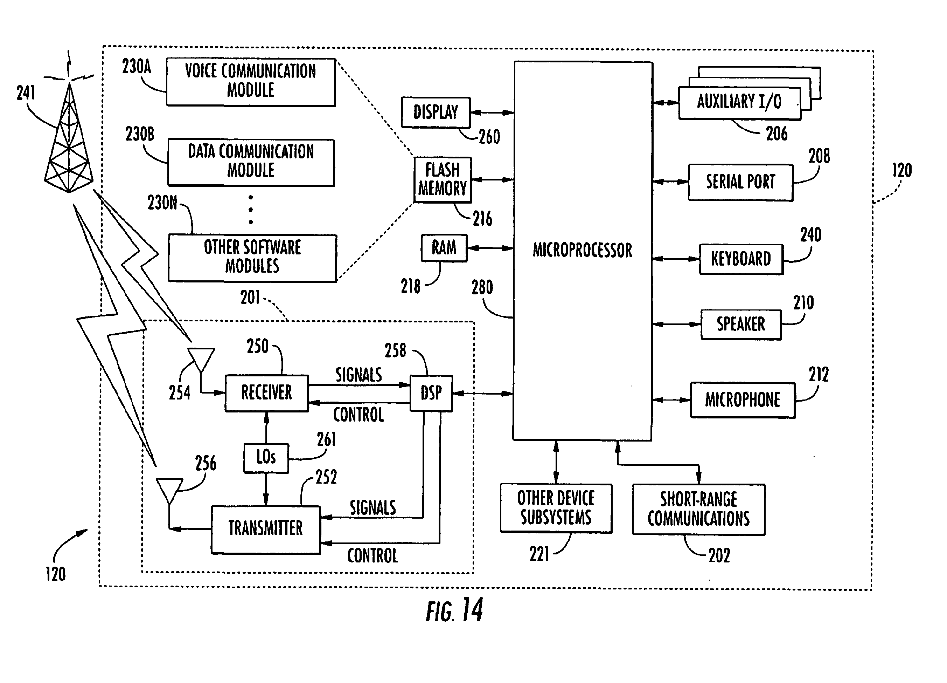

A non-limiting example of various functional components that can be used in the exemplary mobile wireless communications device **120** is further described in the example below with reference to FIG. 14. The device **120** illustratively includes a housing **220**, a keypad **240** and an output device **260**. The output device **260** shown is preferably a display, which is preferably a full graphic LCD. Other types of output devices may alternatively be used. A processing device **280** is contained within the housing **220** and is coupled between the keypad **240** and the display **260**. The processing device **280** controls the operation of the display **260**, as well as the overall operation of the mobile device **120**, in response to actuation of keys on the keypad **240** by the user.

The housing **220** may be elongated vertically, or may take on other sizes and shapes (including clamshell housing structures). The keypad may include a mode selection key, or other hardware or software for switching between text entry and telephony entry.

In addition to the processing device **280**, other parts of the mobile device **120** are shown schematically in FIG. 14. These include a communications subsystem **201**; a short-range communications subsystem **202**; the keypad **240** and the display **260**, along with other input/output devices **206, 208, 210** and **212**; as well as memory devices **216, 218** and various other device subsystems **221**. The mobile device **120** is preferably a two-way RF communications device having voice and data communications capabilities. In addition, the mobile device **120** preferably has the capability to communicate with other computer systems via the Internet.

Operating system software executed by the processing device **280** is preferably stored in a persistent store, such as the flash memory **216**, but may be stored in other types of memory devices, such as a read only memory (ROM) or similar storage element. In addition, system software, specific device applications, or parts thereof, may be temporarily loaded into a volatile store, such as the random access memory (RAM) **218**. Communications signals received by the mobile device may also be stored in the RAM **218**.

The processing device **280**, in addition to its operating system functions, enables execution of software applications **230A-230N** on the device **120.** A predetermined set of applications that control basic device operations, such as data and voice communications **230A** and **230B,** may be installed on the device **120** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **241**. Preferably, the PIM data items are seamlessly integrated, synchronized and updated via the wireless network **241** with the device user's corresponding data items stored or associated with a host computer system.

Communication functions, including data and voice communications, are performed through the communications subsystem **201**, and possibly through the short-range communications subsystem. The communications subsystem **201** includes a receiver **250**, a transmitter **252**, and one or more antennae **254** and **256**. In addition, the communications subsystem **201** also includes a processing module, such as a digital signal processor (DSP) **258,** and local oscillators (LOs) **261.** The specific design and implementation of the communications subsystem **201** is dependent upon the communications network in which the mobile device **120** is intended to operate. For example, the mobile device **120** may include a communications subsystem **201** designed to operate with the Mobitex™, Data TAC™ or General Packet Radio Service (GPRS) mobile data communications networks, and also designed to operate with any of a variety of voice communications networks, such as AMPS, TDMA, CDMA, PCS, GSM, etc. Other types of data and voice networks, both separate and integrated, may also be utilized with the mobile device **120**.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **120** may send and receive communications signals over the communication network **241**. Signals received from the communications network **241** by the antenna **254** are routed to the receiver **250**, which provides for signal amplification, frequency down conversion, filtering, channel selection, etc., and may also provide analog to digital conversion. Analog-to-digital conversion of the received signal allows the DSP **258** to perform more complex communications functions; such as demodulation and decoding. In a similar manner, signals to be transmitted to the network **241** are processed (e.g., modulated and encoded) by the DSP **258** and are then provided to the transmitter **252** for digital to analog conversion, frequency up conversion, filtering, amplification and transmission to the communication network **241** (or networks) via the antenna **256**.

In addition to processing communications signals, the DSP **258** provides for control of the receiver **250** and the transmitter **252**. For example, gains applied to communications signals in the receiver **250** and transmitter **252** may be adaptively controlled through automatic gain control algorithms implemented in the DSP **258**.

In a data communications mode, a received signal, such as a text message or web page download, is processed by the communications subsystem **201** and is input to the processing device **280.** The received signal is then further processed by the processing device **280** for an output to the display **260**, or alternatively to some other auxiliary I/O device **206**. A device user may also compose data items, such as e-mail messages, using the keypad **240** and/or some other auxiliary I/O device **206**, such as a touchpad, a rocker switch, a thumb-wheel, or some other type of input device. The composed data items may then be transmitted over the communications network **241** via the communications subsystem **201**.

In a voice communications mode, overall operation of the device is substantially similar to the data communications mode, except that received signals are output to a speaker **210**, and signals for transmission are generated by a microphone **212**. Alternative voice or audio I/O subsystems, such as a voice message recording subsystem, may also be implemented on the device **120**. In addition, the display **260** may also be utilized in voice communications mode, for example to display the identity of a calling party, the duration of a voice call, or other voice call related information.

Any short-range communications subsystem enables communication between the mobile device **120** and other proximate systems or devices, which need not necessarily be similar devices. For example, the short-range communications subsystem may include an infrared device and associated circuits and components, or a Bluetooth™ communications module to provide for communication with similarly-enabled systems and devices.

It should be understood that GSM is one type of preferred communications system and uses a radio interface that can have an uplink frequency band and downlink frequency band with about 25 MHz bandwidth, typically subdivided into 124 carrier frequency channels, each spaced about 200 KHz apart as non-limiting examples. Time division multiplexing can be used to allow about 8 speech channels per radio frequency channel, giving 8 radio time slots and 8 burst periods grouped into what is called a TDMA frame. For example, a channel data rate could be about 270.833 Kbps and a frame duration of about 4.615 milliseconds (MS) in one non-limiting example. The power output can vary from about 1 to about 2 watts.

Linear predictive coding (LPC) can also be used to reduce the bit rate and provide parameters for a filter to mimic a vocal track with speech encoded at about 13 Kbps. Four different cell sizes can be used in a GSM network, including macro, micro, pico and umbrella cells. A base station antenna can be installed on a master building above the average rooftop level in a macrocell. In a microcell, the antenna height can be under the average rooftop level and used in urban areas. Microcells typically have a diameter of about a few dozen meters and are used indoors. Umbrella cells can cover shadowed regions or smaller cells. Typically, the longest distance for the GSM specification covered by an antenna is about 22 miles depending on antenna height, gain and propagation conditions.

GSM systems typically include a base station subsystem, a network and switching subsystem, and a General Packet Radio Service (GPRS) core network. A subscriber identify module (SIM) is usually implemented in the communications device, for example, the well known SIM card, similar to a smart card containing the subscription information and phone book of a user. The user can also switch handsets or could change operators by changing a SIM.

The GSM signaling protocol has three general layers. Layer 1 is a physical layer using channel structures above the air interface. Layer 2 is the data link layer. Layer 3 is a signaling protocol, which includes three sublayers. These include a Radio Resources Management sublayer to control the setup, maintenance and termination of radio and fixed channels, including handovers. A Mobility Management sublayer manages the location updating and registration procedures and secures the authentication. A Connection Management sublayer handles general call control and manages supplementary services and the short message service. Signaling between different entities such as the Home Location Register (HLR) and Visiting Location Register (VLR) can be accomplished through a Mobile Application Part (MAP) built upon the Transaction Capabilities Application Part (TCAP) of the top layer of the Signaling System No. 7.

A Radio Resources Management (RRM) sublayer can oversee the radio and fixed link establishment between the mobile station and an MSE.

It is also possible to used Enhanced Data Rates for GSM Evolution (EDGE), as an enhancement to General Packet Radio Service (GPRS) networks. EDGE can use 8 Phase Shift Keying (8 PSK) and Gaussian Minimum Shift Keying (GMSK) for different modulation and coding schemes. A three-bit word can be produced for every changing carrier phase. A rate adaptation algorithm can adapt the Modulation and Coding Scheme (MCS) according to the quality of the radio channel and the bit rate and robustness of data transmission. Base stations are typically modified for EDGE use.

## Claims

1. A mobile wireless communications device (20), comprising:
a portable housing (21) having a metallic front housing (26) configured as a peripheral side wall and forming a metallic ring (28);
a circuit board (30) carried by the portable housing (21) and forming a chassis ground plane wherein the metallic ring is peripheral to and surrounds the circuit board;
a wireless communication circuit (32) carried by said circuit board (30);
an antenna circuit (34) connected to the wireless communication circuit (32); and
a frequency selective grounding circuit (40,42,44) positioned at a selected grounding location between the chassis ground plane and the metallic ring , the frequency selective grounding circuit forming a harmonic trap that responds to a specific range of frequencies, **characterised in that** the antenna circuit is carried by said circuit board (30); and the selected grounding location is at a location where induced current in the chassis ground plane changes direction specific to a frequency of operation of the communication device.

2. The mobile wireless communications device (20) according to Claim 1, wherein the frequency selective grounding circuit operates at a specific range of frequencies.

3. The mobile wireless communications device (20) according to Claim 1, wherein the respective frequency selective grounding circuit comprises a series resonator and parallel resonator having a value depending on bandwidth requirements.

4. The mobile wireless communications device (20) according to Claim 3, wherein the series resonator resonates at high frequencies.

5. The mobile wireless communications device (20) according to Claim 1, wherein the frequency selective grounding circuit includes a circuit having a programmable frequency response for grounding.

6. The mobile wireless communications device (20) according to Claim 5, wherein the frequency selective grounding circuit comprises a variable matching device.

7. The mobile wireless communications device (20) according to Claim 1, wherein said antenna (34) comprises a planar inverted F antenna.

8. A method of operating a mobile wireless communications device (20), wherein the device comprises a portable housing (21) having a metallic front housing (26) configured as a peripheral side wall and forming a metallic ring (28), a circuit board (30) carried by the portable housing (21) and forming a chassis ground plane, wherein the metallic ring is peripheral to and surrounds the circuit board, a wireless communication circuit (32) carried by said circuit board (30), and an antenna circuit (34) carried by said circuit board (30) and connected to the wireless communication circuit (32); and
forming a harmonic trap that responds to a specific range of frequencies, said forming comprising positioning a frequency selective grounding circuit (40,42,49) at a selected grounding location between the chassis ground plane and the metallic ring at a location where induced current in the chassis ground plane changes direction specific to a frequency of operation of the communications device.

9. The method according to Claim 8, and further comprising operating the frequency selective grounding circuit at a specific range of frequencies.

10. The method according to Claim 8, wherein the frequency selective grounding circuit comprises a series resonator and a parallel resonator having a value depending on bandwidth requirements.

11. The method according to Claim 8, and wherein the frequency selective grounding circuit comprises a series resonator that resonates at high frequencies.

12. The method according to Claim 8, said frequency selective grounding circuit is formed as circuit having a programmable frequency response for grounding.

13. The method according to Claim 12; wherein the frequency selective grounding circuit comprises a variable matching device.

## Patentansprüche

1. Mobile Drahtloskommunikationsvorrichtung (20) mit:
einem tragbaren Gehäuse (21) mit einem metallischen Vorderseitengehäuse (26), das als eine periphere Seitenwand konfiguriert ist und das einen metallischen Ring (28) bildet,
einer Platine (30), die von dem tragbaren Gehäuse (21) getragen wird und eine Gehäusemasseplatte bildet, wobei der metallische Ring zur Platine peripher ist und sie umgibt,
einer Drahtloskommunikationsschaltung (32), die von der Platine (30) getragen wird,
einer Antennenschaltung (34), die mit der Drahtloskommunikationsschaltung (32) verbunden ist, und
einer frequenzselektiven Masseschaltung (40, 42, 44), die an einer ausgewählten Massestelle zwischen der Gehäusemasseplatte und dem metallischen Ring angeordnet ist, wobei die frequenzselektive Masseschaltung eine harmonische Falle bildet, die auf einen spezifischen Frequenzbereich reagiert,
**dadurch gekennzeichnet, dass**
die Antennenschaltung von der Platine (30) getragen wird und
die ausgewählte Massestelle sich an einer Stelle befindet, wo induzierter Strom in der Gehäusemasseplatte eine Richtung spezifisch für eine Betriebsfrequenz der Kommunikationsvorrichtung ändert.

2. Mobile Drahtloskommunikationsvorrichtung (20) nach Anspruch 1, wobei die frequenzselektive Masseschaltung in einem spezifischen Frequenzbereich arbeitet.

3. Mobile Drahtloskommunikationsvorrichtung (20) nach Anspruch 1, wobei die jeweilige frequenzselektive Masseschaltung einen Serienresonator und einen Parallelresonator aufweist, der einen Wert aufweist, der von Bandbreitenanforderungen abhängt.

4. Mobile Drahtloskommunikationsvorrichtung (20) nach Anspruch 3, wobei der Serienresonator bei hohen Frequenzen schwingt.

5. Mobile Drahtloskommunikationsvorrichtung (20) nach Anspruch 1, wobei die frequenzselektive Masseschaltung eine Schaltung aufweist, die eine programmierbare Frequenzantwort zum Erden aufweist.

6. Mobile Drahtloskommunikationsvorrichtung (20) nach Anspruch 5, wobei die frequenzselektive Masseschaltung eine veränderliche Anpassungsvorrichtung aufweist.

7. Mobile Drahtloskommunikationsvorrichtung (20) nach Anspruch 1, wobei die Antenne (34) eine ebene umgekehrte F-Antenne aufweist.

8. Verfahren zum Betreiben einer mobilen Drahtloskommunikationsvorrichtung (20), wobei die Vorrichtung ein tragbares Gehäuse (21) mit einem metallischen Vorderseitengehäuse (26), das als eine periphere Seitenwand konfiguriert ist und das einen metallischen Ring (28) bildet, eine Platine (30), die von dem tragbaren Gehäuse (21) getragen wird und eine Gehäusemasseplatte bildet, wobei der metallische Ring zur Platine peripher ist und sie umgibt, eine Drahtloskommunikationsschaltung (32), die von der Platine (30) getragen wird, und eine Antennenschaltung (34) aufweist, die von der Platine (30) getragen wird und mit der Drahtloskommunikationsschaltung (32) verbunden ist, und
Bilden einer harmonischen Falle, die auf einen spezifischen Frequenzbereich reagiert, wobei das Bilden ein Anordnen einer frequenzselektiven Masseschaltung (40, 42, 44) an einer ausgewählten Massestelle zwischen der Gehäusemasseplatte und dem metallischen Ring an einer Stelle, wo induzierter Strom in der Gehäusemasseplatte eine Richtung spezifisch für eine Betriebsfrequenz der Kommunikationsvorrichtung ändert.

9. Verfahren nach Anspruch 8, ferner mit Betreiben der frequenzselektiven Masseschaltung bei einem spezifischen Frequenzbereich.

10. Verfahren nach Anspruch 8, wobei die frequenzselektive Masseschaltung einen Serienresonator und einen Parallelresonator aufweist, der einen Wert aufweist, der von Bandbreitenanforderungen abhängt.

11. Verfahren nach Anspruch 8, und wobei die frequenzselektive Masseschaltung einen Serienresonator aufweist, der bei hohen Frequenzen schwingt.

12. Verfahren nach Anspruch 8, wobei die frequenzselektive Masseschaltung als eine Schaltung gebildet wird, die eine programmierbare Frequenzantwort zum Erden aufweist.

13. Verfahren nach Anspruch 12, wobei die frequenzselektive Masseschaltung eine veränderliche Anpassungsvorrichtung aufweist.

## Revendications

1. Dispositif de communication mobile sans fil (20), comprenant :
un boîtier portatif (21) comportant un boîtier frontal métallique (26) configuré sous la forme d'une paroi latérale périphérique et formant un anneau métallique (28) ;
une carte de circuits imprimés (30) supportée par le boîtier portatif (21) et formant un plan de masse du châssis, l'anneau métallique étant périphérique à la carte de circuits imprimés et l'entourant ;
un circuit de communication sans fil (32) supporté par ladite carte de circuits imprimés (30) ;
un circuit d'antenne (34) connecté au circuit de communication sans fil (32) ; et
un circuit de mise à la masse sélectif en fréquence (40, 42, 44) placé dans un emplacement sélectionné de mise à la masse entre le plan de masse du châssis et l'anneau métallique, le circuit de mise à la masse sélectif en fréquence formant un piège harmonique qui répond à une plage spécifique de fréquences ;
**caractérisé en ce que** :
le circuit d'antenne est supporté par ladite carte de circuits imprimés (30) ; et
l'emplacement sélectionné de mise à la masse est à un emplacement tel que le courant induit dans le plan de masse du châssis change de direction spécifiquement en fonction d'une fréquence de fonctionnement du dispositif de communication.

2. Dispositif de communication mobile sans fil (20) selon la revendication 1, dans lequel le circuit de mise à la masse sélectif en fréquence fonctionne sur une plage spécifique de fréquences.

3. Dispositif de communication mobile sans fil (20) selon la revendication 1, dans lequel le circuit respectif de mise à la masse sélectif en fréquence comprend un résonateur en série et un résonateur en parallèle ayant une valeur qui dépend des exigences de bande passante.

4. Dispositif de communication mobile sans fil (20) selon la revendication 3, dans lequel le résonateur en série résonne à des fréquences élevées.

5. Dispositif de communication mobile sans fil (20) selon la revendication 1, dans lequel le circuit de mise à la masse sélectif en fréquence comprend un circuit ayant une réponse en fréquence programmable pour la mise à la masse.

6. Dispositif de communication mobile sans fil (20) selon la revendication 5, dans lequel le circuit de mise à la masse sélectif en fréquence comprend un dispositif d'adaptation variable.

7. Dispositif de communication mobile sans fil (20) selon la revendication 1, dans lequel ladite antenne (34) comprend une antenne planaire en F inversé.

8. Procédé de fonctionnement d'un dispositif de communication mobile sans fil (20), dans lequel le dispositif comprend un boîtier portatif (21) comportant un boîtier frontal métallique (26) configuré sous la forme d'une paroi latérale périphérique et formant un anneau métallique (28), une carte de circuits imprimés (30) supportée par le boîtier portatif (21) et formant un plan de masse du châssis, l'anneau métallique étant périphérique à la carte de circuits imprimés et l'entourant, un circuit de communication sans fil (32) supporté par ladite carte de circuits imprimés (30), et un circuit d'antenne (34) supporté par ladite carte de circuits imprimés (30) et connecté au circuit de communication sans fil (32) ; et
comprenant l'étape consistant à former un piège harmonique qui répond à une plage spécifique de fréquences, ladite étape de formation comprenant les étapes consistant à placer un circuit de mise à la masse sélectif en fréquence à un emplacement sélectionné de mise à la masse entre le plan de masse du châssis et l'anneau métallique, à un emplacement tel que le courant induit dans le plan de masse du châssis change de direction spécifiquement en fonction d'une fréquence de fonctionnement du dispositif de communication.

9. Procédé selon la revendication 8, comprenant en outre l'étape consistant à faire fonctionner le circuit de mise à la masse sélectif en fréquence sur une plage spécifique de fréquences.

10. Procédé selon la revendication 8, dans lequel le circuit de mise à la masse sélectif en fréquence comprend un résonateur en série et un résonateur en parallèle ayant une valeur qui dépend des exigences de bande passante.

11. Procédé selon la revendication 8, dans lequel le circuit de mise à la masse sélectif en fréquence comprend un résonateur en série qui résonne à des fréquences élevées.

12. Procédé selon la revendication 8, dans lequel ledit circuit de mise à la masse sélectif en fréquence prend la forme d'un circuit qui a une réponse en fréquence programmable pour la mise à la masse.

13. Procédé selon la revendication 12, dans lequel le circuit de mise à la masse sélectif en fréquence comprend un dispositif d'adaptation variable.
